# EUROPEAN PATENT SPECIFICATION

(11) **EP 3 671 408 B1**
(45) Date of publication and mention of the grant of the patent: **27.07.2022**
(21) Application number: 17906783.0
(22) Date of filing: 24.08.2017
(51) Int. Cl.: G06F 3/04847, G06F 3/0484, G02B 27/00, G06F 3/01, G02B 27/01

(54) **VIRTUAL REALITY DEVICE AND CONTENT ADJUSTING METHOD THEREFOR**
VORRICHTUNG DER VIRTUELLEN REALITÄT UND INHALTSANPASSUNGSVERFAHREN DAFÜR
DISPOSITIF DE RÉALITÉ VIRTUELLE ET SON PROCÉDÉ D'AJUSTEMENT DE CONTENU

(30) Priority: 16.08.2017 CN 201710702444
(43) Date of publication of application: 24.06.2020
(73) Proprietor: Goertek Technology Co., Ltd., Qingdao, Shandong 266104 (CN)
(72) Inventor: SHEN, Zhixing, Qingdao Shandong 266104 (CN)
(74) Representative: Renaudo, Adrien Hanouar
(86) International application number: PCT/CN2017/098872
(87) International publication number: WO 2019/033446

(56) References cited:
- WO-A1-2016/043537
- CN-A- 101 164 084
- CN-A- 106 325 505
- CN-A- 106 445 173
- CN-A- 106 527 722
- CN-A- 106 796 351
- US-A1- 2012 293 407
- US-A1- 2014 191 948
- US-A1- 2017 123 492

## Description

### Technical Field

The present invention relates to an intelligent interaction technology, and more particularly relates to a virtual reality (VR) device and a content adjustment method thereof.

### Background

VR (Virtual Reality) device is a wearable smart device worn on the user's head. It uses VR technology to create virtual visual and auditory effects for users, provides users with an immersive virtual environment, guides users to generate feeling in the virtual environment, and realizes the interaction between the user and the virtual content.

At present, when the user is immersed in the virtual environment, the object content of the virtual target object displayed in the virtual environment can be adjusted to realize the interaction between the user and the virtual content. For example, the target object may be a display page in the created VR scene. When the page content of the page is adjusted, the virtual environment may be adjusted to create a continuously changing VR scene. In the VR scenario, the target object is adjusted mainly by using a manner of electrically connecting the VR device and the control device, and the user manually operates the control device to adjust the target content of the target object in the virtual environment.

However, in the existing VR scene, the mode of using the control device to adjust the target content of the target object requires manual operation by the user, which is complicated to implement. Prior art D1 (WO 2016/043537 A1) discloses a head-mounted display controlled by sightline, a method for controlling same, and a computer program for controlling same, which comprises: a sensor unit configured to measure the movement of a user wearing the HMD; a display unit configured to display an image; and a control unit configured to calculate the user's sightline direction from a measurement value from the sensor unit and, when the user's sightline direction satisfies a preset condition, control elements of the image other than the viewpoint using the user's sightline as a input signal (see ABSTRACT of D1). Prior art D2 (US 2014/191948 A1) discloses an apparatus and a method for providing control service using head tracking technology in electronic device, where the method includes detecting face motion from an image captured through a camera of the electronic device and executing a control service corresponding to the detected face motion information (see ABSTRACT of D2). Prior art D3 (US2017/123492 A1) discloses systems and methods for biomechanically-based eye signals for interacting with real and virtual objects, where the system may be included within unobtrusive headwear that performs eye tracking and controls screen display; the system may also utilize remote eye tracking camera(s), remote displays and/or other ancillary inputs; screen layout is optimized to facilitate the formation and reliable detection of rapid eye signals; the detection of eye signals is based on tracking physiological movements of the eye that are under voluntary control by the device wearer; and the detection of eye signals results in actions that are compatible with wearable computing and a wide range of display devices (see ABSTRACT of D3).

### Summary

In view of this, the present application provides a VR (virtual reality) device and a content adjustment method according to the annexed claims.

### Brief Description of the Drawings

Fig. 1 is a flowchart of a content adjustment method of a VR device of some examples describing some of the features of the independent claims but not the whole claimed invention.
Fig. 2 is a schematic diagram of a navigation control according to some embodiments of the present application;
Fig. 3 is a schematic diagram of an object content and a corresponding navigation control according to some embodiments of the present application;
Fig. 4 is a schematic diagram of another object content and a corresponding navigation control according to some embodiments of the present application;
Fig. 5 and Fig. 6 are flowcharts of a content adjustment method of a VR device according to an example not covered by the claims.
Fig. 7 is a structure schematic diagram of a VR device of some embodiments of the present application; and
Fig. 8 is a structure schematic diagram of a head-mounted VR display device of some embodiments of the present application.

### Description of Embodiments

Some embodiments of the present application are mainly applied to a VR (virtual Reality) device, and the content adjustment of the VR device is controlled by a slider.

In some embodiments of the present application, a navigation control is associated with a target object, and the navigation control corresponding to the target object is displayed. When a gaze point of a user changes on the navigation control, the position change of the gaze point of the user in the navigation control may be determined, an initial position and a moving position are determined, an object change quantity and an object change direction are further determined based on the initial position and the moving position, and the content of the target object can be adjusted in accordance with the object change quantity and the object change direction.

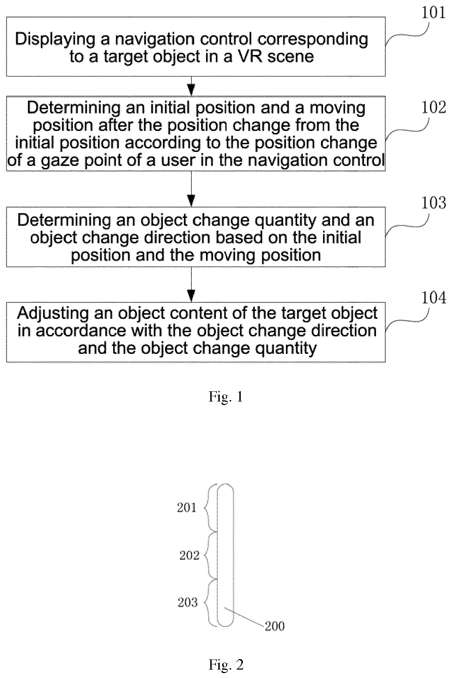

Fig. 1 shows a content adjustment method of a VR device provided according to some examples not comprised in the claimed invention.

The method may include the steps as follows.

101: Displaying a navigation control corresponding to a target object in a VR scene.

A VR device may create an immersive experience of a virtual environment, and the VR device may be a VR helmet, VR glasses, or the like. When creating a virtual environment, the VR device needs to display multiple types of objects, and the target object is any type of object displayed in the virtual environment created by the VR device. The target object may be brightness, a sound, an output content, a target body in the output content or an area content in the output content, or the like in the virtual environment created by the VR device.

The navigation control is associated with the target object, and a page turning operation on the object content of the target object may be controlled by the navigation control. The object content of the target object is changed along with an adjustment action. The navigation control and the target object may be in a one-to-one correspondence, and one navigation control may control one target object to implement a targeted adjustment operation of the target object.

Optionally, the navigation control may be a slider, and when a sliding point of the slider slides on the slider, the object content of the target object may be adjusted. The slider may be divided in accordance with the total change quantity of the object content of the target object, and each segment of the slider corresponds to one object content. For example, if the target object is a clock, the clock includes 6 object contents, the slider may be divided into 6 sliding areas. Of course, other modes may be used to determine a plurality of object contents of the target object corresponding to the navigation control, which will be described in detail in the following embodiments.

102: Determining an initial position and a moving position after the position change from the initial position according to the position change of a gaze point of a user in the navigation control. Optionally, the initial position and the moving position after the position change from the initial position may be determined according to the position change of a gaze point of a user in the navigation control when it is detected that the navigation control is triggered.

The navigation control is associated with the target object, and the target object may be adjusted by the navigation control. When the navigation control is triggered, the position of the gaze point of the user at a triggering time may be determined as an initial position.

The navigation control may be provided with a collision box, and when the gaze point of the user moves to a collision area where the collision box of the navigation control is located, the navigation control may be triggered. After the navigation control is triggered, the adjustment of the object content of the target object may be controlled according to the position change of the gaze point of the user in the navigation control.

After the navigation control is triggered, the user may control the gaze point to move in the navigation control. The user may achieve the position change of the gaze point of the user in the navigation control by controlling the head to move up and down or left and right. For example, the position change of the gaze point of the user in the navigation control may be achieved by looking down or up or gazing leftward or rightward. Every time the position of the gaze point of the user changes in the navigation control, a corresponding initial position and a moving position may be determined, where the initial position may be a gaze point position when the navigation control is triggered or a gaze point position where the gaze point is adjusted from stillness to motion. During the movement of a line of sight of the user, the moving position may be a certain position during the continuous movement of the user, or may be an end moving position when the user stops moving the line of sight. That is, every time the gaze point of the user moves, the initial position and the moving position change along with the change of the line of sight, and the moving position is an initial position for the next movement.

Optionally, the gaze point of the user may be determined in the following manners:
determining a center point of a connection line between eyes of the user; and
mapping the center point to a display screen of the VR device, wherer an obtained mapping point is the gaze point of the user.

Optionally, the gaze point of the user may be a virtual point, which may be determined by detecting the positions of the eyes. The gaze point of the user may also be a subsistent point. For example, a laser emitter may be disposed at the center position between two optical lenses in the VR device, and the gaze point of the user may be simulated by the laser emitter.

When the gaze point of the user is located in the navigation control, the navigation control may be triggered. When the navigation control is triggered, the initial position where the gaze point of the user is located may be determined. The user controls the gaze point to move, and when the movement ends, the moving position of the gaze point of the user in the navigation control may be determined. When the gaze point continues to move from the moving position, the moving position is a new initial position for continuously adjusting the object content of the target object. Optionally, the navigation control may be uniformly divided into a plurality of navigation areas, each navigation area corresponding to one object content. When the gaze point of the user is located in any one navigation area, the object content corresponding to the navigation area is displayed correspondingly. For example, as shown in Fig. 2, the navigation control 200 is divided into three navigation areas, namely a navigation area 201, a navigation area 202 and a navigation area 203, and each navigation area correspondes to one object content.

103: Determining an object change quantity and an object change direction based on the initial position and the moving position.

104: Turning a page in accordance with the object change direction and the object change quantity, to adjust an object content of the target object.

The target object includes a plurality of object contents, among which an adjustment operation may be performed. The object content of the target object is an actual content associated with the target object. For example, when the target object is brightness, the object content may be display brightness; when the target object is a sound, the object content may be an output sound; when the target object is an output content, the object content may be a display content displayed after the content is output; when the target object is a target body in the output content, the object content may be a display sub-content corresponding to the target body after the content is output; and when the target object is a partial area content in the output content, the object content may be an area display content after the content is output.

The target object is adjusted in real time, a corresponding moving position may be acquired in real time, and the object content of the target object is adjusted in real time. The navigation controls may be in one-to-one correspondence with the object contents of the target object, and each navigation position may correspond to the corresponding object content. When the moving position changes, the corresponding object content may be adjusted accordingly.

The object change direction is an object change direction for a current object content of the target object, in particular, a forward change, a backward change, an increasing change or a decreasing change for a current object content. If the change is the forward change, the display content arranged in front of the current display content may be displayed, and if the change is the backward change, the display content arranged behind the current display content may be displayed. If the change is the increasing change, the display brightness, display sound and the like of the current VR scene may be increased. If the change is the decreasing change, the display brightness, the display sound and the like in the current VR scene may be decreased.

Optionally, when the plurality of navigation areas of the navigation control are in one-to-one correspondence with the plurality of object contents of the target object respectively, the position of the gaze point of the user changes in the navigation control, the initial position and the moving position may be determined, and the object content of the navigation area where the initial position is located and the object content corresponding to the navigation area where the moving position is located may be further determined. Therefore, according to the content change of the object content corresponding to the navigation area where the moving position is located to the object content of the navigation area where the initial position is located, the object change quantity and the object change direction may be determined.

In the process of moving the gaze point of the user from the initial position to the moving position, for any one object content corresponding to a navigation area where a current position is located, the object change quantity and the page turning content may also be calculated, thereby correspondingly adjusting the object content of the target object, so that the object content of the target object dynamically changes, and when the moving position is reached, the object content corresponding to the moving position is displayed.

In the embodiment of the present application, the navigation control corresponding to the target object is displayed in the VR scene, the user may adjust the content of the target object by the displayed navigation control, when the gaze point of the user changes in the navigation control, the initial position and the moving position of the gaze point may be determined, the object change quantity and the object change direction may be determined according to the initial position and the moving position, and the object content of the target object may be further adjusted according to the object change quantity and the object change direction. The user may adjust the object content by controlling the navigation control, thereby improving the efficiency of content adjustment.

In present invention, the target object is a target body in the output content of the virtual environment created by the VR device. Several possible implementation modes of the target object will be described in detail below.

In the first implementation mode not covered by the claimed invention, the target object is brightness, the object change quantity includes a brightness change value, and the object change direction includes a brightness change direction.

The determining, based on the initial position and the moving position, an object change quantity and an object change direction includes:
determining, based on the initial position and the moving position, a brightness change quantity and a brightness change direction of display brightness.

The adjusting the target object in accordance with the object change direction and the object change quantity includes:
adjusting the display brightness in accordance with the brightness change direction and the brightness change quantity.

Based on the same adjustment principle of a target object, the target object may further include a playing sound, a display tone value and the like. The display brightness refers to the brightness of a page content displayed in the VR scene, a display control may be disposed in a display interface for the display brightness, and when the VR device determines that time for the gaze point of the user gazing at the display control exceeds a preset time, the brightness adjustment of the VR device may be enabled, so that the brightness adjustment mode is simplified.

In the second implementation mode, the target object is an output content, the object change quantity includes a page turning offset, and the object change direction includes a page turning direction.

The step of determining, based on the initial position and the moving position, an object change quantity and an object change direction includes:
determining, based on the initial position and the moving position, a page turning offset and a page turning direction of a display content.

The adjusting the target object in accordance with the object change direction and the object change quantity includes:
adjusting the display content of the output content in accordance with the page turning offset and the page turning direction.

There may be a plurality of display contents, among which the adjustment operation of the object content of the target object may be achieved by page turning. The display content is a virtual content displayed currently in a screen of a VR device. In particular, the virtual content may be a plurality of display pictures. During virtual display, the display pictures may be connected and displayed, to create a VR scene where the display contents continuously change. During the display process, each current display content may create a virtual scene to provide the user with an immersive VR experience.

The gaze point of the user may change at any time in the displayed page content to generate a corresponding object change quantity and object change direction. The object change quantity refers to a page turning offset in this implementation mode, and specifically refers to a page turning size of the display content. The display page may gradually change according to the page turning size. For example, when the display content is a scenery and gradually changes, an experience that the scenery gradually changes with the line of sight may be created.

In the third implementation mode, the target object is a target body in an output content of a VR device, the object change quantity includes a switching number, and the object change direction includes a switching direction.

The determining, based on the initial position and the moving position, an object change quantity and an object change direction includes:
determining, based on the initial position and the moving position, a switching number and a switching direction corresponding to a display sub-content.

The adjusting the target object in accordance with the object change direction and the object change quantity includes:
adjusting the display sub-content of the target body in accordance with the switching number and the switching direction corresponding to the target body.

The target body may correspond to a plurality of display sub-contents. The display sub-contents corresponding to the target body may be switched according to a corresponding switching number and switching direction. A switching quantity may be determined according to the switching number of the target body.

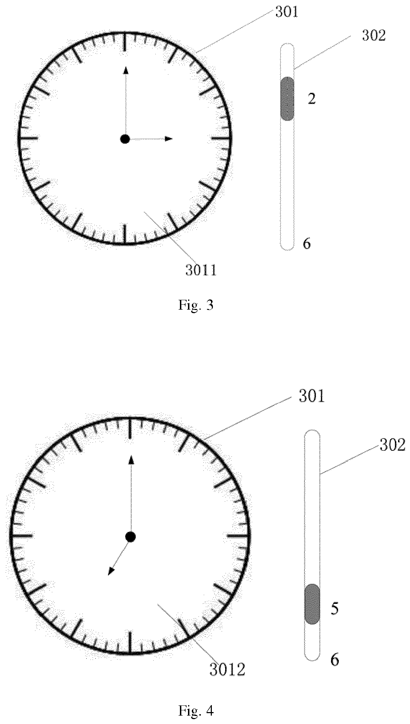

The target body in the display page may specifically refer to any body in a current VR scene. For example, when the VR scene is a created virtual room, the target body may be a clock in the created virtual room. For convenience of understanding, as exemplified in the following, as shown in Fig. 3 and Fig. 4, when the target object 301 is a clock, a plurality of object contents corresponding to the target object 301 are clock interfaces indicating different time information. It is assumed that the target object includes 6 object contents, and in Fig. 3, the second object content 3011 is displayed currently. During the trigger of the navigation control 302, the object change quantity and the object change direction may be determined according to the position change of the gaze point of the user in the navigation control 302, and if the object change direction is backward page turning and the object change quantity is 3, the target object 301 is adjusted to the fifth object content 3012, as shown in Fig. 4.

In the embodiment of the present invention, the implementation mode of the target object is described in detail, the display of various implementation modes may be controlled in a VR scene, and the process of controlling the target object in the VR scene is controlled by using a navigation control, and the control process is more simplified and easier to implement.

Optionally, the position change of the gaze point of the user in the navigation control may be achieved by moving the head up/down or rotating the eyeballs up/down, or moving the head left/right or rotating the eyeballs left and right. When the navigation control is perpendicular to the horizontal line, the position change of the gaze point may be achieved by moving the head up/down or rotating the eyeballs up/down, and at this time, the look-down/look-up angle of the user may be determined. When the navigation control is parallel to the horizontal line, the position change of the gaze point may be achieved by moving the head left/right or rotating the eyeballs left and right, and at this time, a leftward/rightward offset angle may be determined based on a vertical line of the horizontal line.

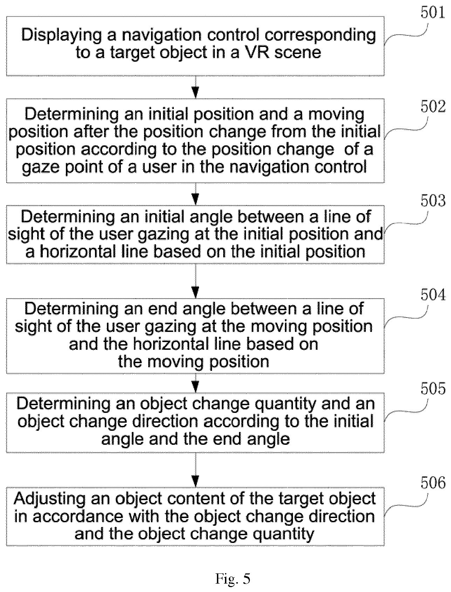

Therefore, it is also possible to calculate the object change quantity and the object change direction based on the look-down/look-up angle of the user or the leftward/rightward offset angle. When the navigation control is perpendicular to the horizontal line, Fig. 5 shows a content adjustment method of a VR device according to an example not covered by the claims.

The method may include several steps as follows.

501: Displaying a navigation control corresponding to a target object in a VR scene.

When the head moves up/down to drive the gaze point to change up and down, the navigation control is perpendicular to a horizontal line.

502: Determining an initial position and a moving position after the position change from the initial position according to the position change of a gaze point of a user in the navigation control. 503: Determining an initial angle between a line of sight of the user gazing at the initial position and the horizontal line based on the initial position.

504: Determining an end angle between a line of sight of the user gazing at the moving position and the horizontal line is determined based on the moving position.

505: Determining the object change quantity and the object change direction are determined according to the initial angle and the end angle.

Optionally, the determining the object change quantity and the object change direction according to the initial angle and the end angle may include:
subtracting the initial angle from the end angle to obtain an angle difference value;
determining the object change direction according to a positive and negative characteristic of the angle difference value; and
determining the object change quantity by a ratio of the angle difference value to a navigation angle threshold.

Optionally, the navigation angle threshold may be determined in the following manners:
counting a total change quantity of the object content of the target object;
determining, when the gaze point of the user is respectively located at a first end and a second end of the navigation control, an included angle between a line of sight of the user gazing at the first end and a line of sight of the user gazing at the second end; and
calculating a ratio of the included angle to the total change quantity to determine the navigation angle threshold corresponding to each object content.

506: Turning a page in accordance with the object change direction and the object change quantity, to adjust an object content of the target object.

In the embodiment of the present application, the initial angle is determined according to the initial position, the end angle is determined according to the moving position, and the corresponding page turning angle and object change direction may be determined according to the initial angle and the end angle. The control process of the solution of determining the corresponding page turning angle and object change direction according to the angles is simpler, it is not necessary to additionally set object contents corresponding to different positions, the object change quantity and the object change direction may be determined by simple calculation, and the content adjustment efficiency of the target object may be improved.

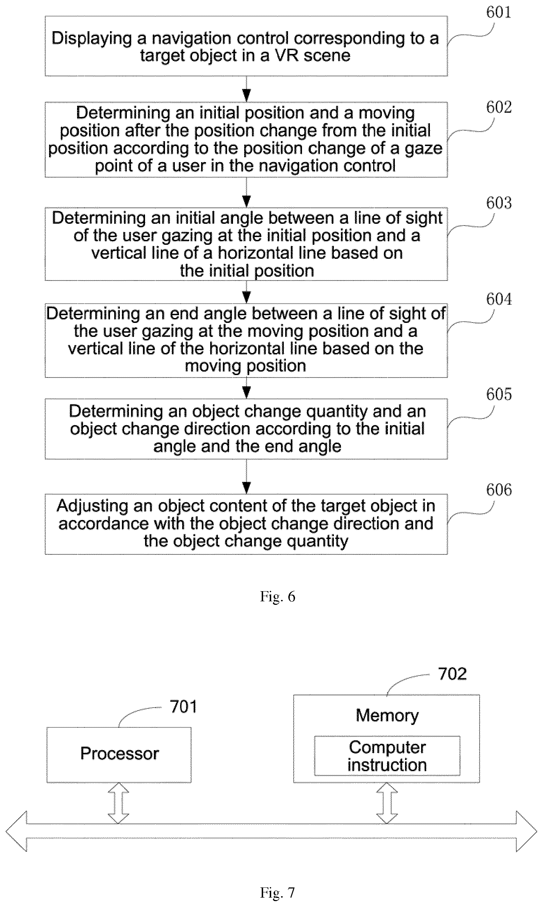

Or, when the navigation control is parallel to the horizontal line, Fig. 6 shows a content adjustment method of a VR device according to an example not covered by the claims.

The method may include several steps as follows.

601: Displaying a navigation control corresponding to a target object in a VR scene.

When the head moves left/right to drive the gaze point to change left and right, the navigation control is parallel to a horizontal line.

602: Determining an initial position and a moving position after the position change from the initial position according to the position change of a gaze point of a user in the navigation control.

603: Determining an initial angle between a line of sight of the user gazing at the initial position and a vertical line of the horizontal line is determined based on the initial position.

604: Determining an end angle between a line of sight of the user gazing at the moving position and a vertical line of the horizontal line based on the moving position.

605: Determining the object change quantity and the object change direction according to the initial angle and the end angle.

Optionally, the determining the object change quantity and the object change direction according to the initial angle and the end angle may include:
subtracting the initial angle from the end angle to obtain an angle difference value;
determining the object change direction according to a positive and negative characteristic of the angle difference value; and
determining the object change quantity by a ratio of the angle difference value to a navigation angle threshold.

606: Turning a pageps in accordance with the object change direction and the object change quantity, to adjust an object content of the target object.

In the embodiment of the present application, the initial angle is determined according to the initial position, the end angle is determined according to the moving position, and the corresponding page turning angle and object change direction may be determined according to the initial angle and the end angle. The control process of the solution of determining the corresponding page turning angle and object change direction according to the angles is simpler, it is not necessary to additionally set object contents corresponding to different positions, the object change quantity and the object change direction may be determined by simple calculation, and the content adjustment efficiency of the target object may be improved.

As an embodiment, the navigation angle threshold may be determined in the following manners: counting a total change quantity of the object content of the target object;
determining, when the gaze point of the user is respectively located at a first end and a second end of the navigation control, an included angle between a line of sight of the user gazing at the first end and a line of sight of the user gazing at the second end; and
calculating a ratio of the included angle to the total change quantity to determine the navigation angle threshold corresponding to each object content.

Optionally, two ends of the navigation control are respectively used for corresponding to the maximum swing angle of the user, and the swing angle may be an up-down swing angle or a left-right swing angle.

When the user gazes at the navigation control, an included angle between a line of sight of the user gazing at the first end and a line of sight of the user gazing at the second end may be a maximum included angle that can be achieved by the swing of the user. A ratio of the included angle to the total change quantity may be calculated, and rounded to serve as a navigation angle threshold corresponding to each object content.

Under normal conditions, when the line of sight is at two ends of the navigation control, the determined included angle is a stable constant. Each object content is page-turned in sequence. When the total change quantity is large enough, the navigation angle threshold determined according to the included angle and the total change quantity is small enough, that is, the page turning time of each object content is short enough to create a continuous adjustment effect. In this case, the target object corresponding to the navigation control may be regarded as a continuously played video. For example, when the target object is a television, more object contents and a navigation angle threshold small enough may be set for the navigation control of the television, and when the object content is continuously adjusted, the effect that the television is playing a video may be created.

In the embodiment of the present application, the navigation angle threshold corresponding to each object content may be determined by the navigation range of the navigation control and the total change quantity of the object content, so that the size of the navigation angle threshold may be determined, the subsequent turned page and the object change direction may be determined, and then the object content may be quickly adjusted.

As another embodiment, the navigation control includes a plurality of navigation areas in a VR scene, the plurality of navigation areas are successively arranged to form a rectangular structure, one target object includes a plurality of object contents, and the plurality of navigation areas are in one-to-one correspondence with the plurality of object contents.

The determining, based on the initial position and the moving position, an object change quantity and an object change direction may include:
determining at least one navigation area contained between the initial position and the moving position;
determining at least one object content corresponding to the at least one navigation area;
counting the display quantity of the at least one object content as an object change quantity; and acquiring a moving direction from a navigation area corresponding to the initial position to a navigation area corresponding to the moving position as an object change direction.

The turning the page in accordance with the object change direction and the object change quantity to adjust an object content of the target object may include:
sequentially displaying, starting from the object content corresponding to the navigation area at the initial position, the at least one object content according to the object change direction until the object content corresponding to the navigation area at the moving position is displayed.

In the embodiment of the present application, the navigation area is provided for the navigation control, the object content corresponding to each navigation area may be separately displayed, and when the gaze point may be located in the navigation area, the object content may be correspondingly displayed, so that it is more convenient to adjust the object content.

Fig. 7 illustrates a VR device provided according to an embodiment of the present application. The VR device includes a non-volatile memory 702 and a processor 701, the non-volatile memory 702 is configured to store computer-readable program codes, and the processor 701 is configured to execute the computer program codes to implement:
displaying a navigation control corresponding to a target object in a VR scene; determining, according to the position change of a gaze point of a user in the navigation control, an initial position and a moving position
after the position change from the initial position; determining, based on the initial position and the moving position, an object change quantity and an object change direction; and adjusting an display content of the target object in accordance with the object change direction and the object change quantity.

A VR device may create an immersive experience of a virtual environment, and the VR device may be a VR helmet, VR glasses, or the like. When creating a virtual environment, the VR device needs to display multiple types of objects, and the target object is any type of object displayed in the virtual environment created by the VR device. The target object may be brightness, a sound, an output content, a target body in the output content or an area content in the output content, or the like in the virtual environment created by the VR device.

The navigation control is associated with the target object, and a page turning operation on the object content of the target object may be controlled by the navigation control. The object content of the target object is changed along with the change of an adjustment action. The navigation control and the target object may be in a one-to-one correspondence, and a navigation control may control a target object to implement a targeted adjustment operation of the target object. Optionally, the navigation control may be a slider, and when a sliding point of the slider slides on the slider, the object content of the target object may be adjusted. The slider may be divided according to the total change quantity of the object content of the target object, and each segment of the slider corresponds to one object content. For example, if the target object is a clock, the clock includes 6 object contents, the slider may be divided into 6 sliding areas. Of course, other modes may be used to determine a plurality of object contents of a target object corresponding to the navigation control, which will be described in detail in the following embodiments. Optionally, an initial position and a moving position after the position change from the initial position may be determined according to the position change of a gaze point of a user in the navigation control when it is detected that the navigation control is triggered.

The navigation control is associated with the target object, and the target object may be adjusted by the navigation control. When the navigation control is triggered, the position of the gaze point of the user at a triggering time may be determined as an initial position.

The navigation control may be provided with a collision box, and when the gaze point of the user moves to a collision area where the collision box of the navigation control is located, the navigation control may be triggered. After the navigation control is triggered, the adjustment of the object content of the target object may be controlled according to the position change of the gaze point of the user in the navigation control.

After the navigation control is triggered, the user may control the gaze point to move in the navigation control. The user may achieve the position change of the gaze point of the user in the navigation control by controlling the head to move up and down or left and right. For example, the position change of the gaze point of the user in the navigation control may be achieved by looking down or up or gazing leftward or rightward. Every time the position of the gaze point of the user changes in the navigation control, a corresponding initial position and moving position may be determined, wherein the initial position may be a gaze point position when the navigation control is triggered or a gaze point position where the gaze point is adjusted from stillness to motion. During the movement of a line of sight of the user, the moving position may be a certain position during the continuous movement of the user, or may be an end moving position when the user stops moving the line of sight. That is, every time the gaze point of the user moves, the initial position and the moving position change along with the change of the line of sight, the moving position being an initial position for the next movement.

Optionally, the gaze point of the user may be determined by the processor 701 in the following manners:
determining a center point of a connection line between eyes of the user; and
mapping the center point to a display screen of the VR device, an obtained mapping point being the gaze point of the user.

Optionally, the gaze point of the user may be a virtual point, which may be determined by detecting the positions of the eyes. The gaze point of the user may also be a subsistent point. For example, a laser emitter may be disposed at the center position between two optical lenses in the VR device, and the gaze point of the user may be simulated by the laser emitter.

When the gaze point of the user is located in the navigation control, the navigation control may be triggered. When the navigation control is triggered, the initial position where the gaze point of the user is located may be determined. The user controls the gaze point to move, and when the movement ends, the moving position of the gaze point of the user in the navigation control may be determined. When the gaze point continues to move from the moving position, the moving position is a new initial position for continuously adjusting the object content of the target object. Optionally, the navigation control may be uniformly divided into a plurality of navigation areas, each navigation area corresponding to one object content. When the gaze point of the user is located in any one navigation area, the object content corresponding to the navigation area is displayed correspondingly.

The target object includes a plurality of object contents, among which an adjustment operation may be performed. The object content of the target object is an actual content associated with the target object. For example, when the target object is brightness, the object content may be display brightness; when the target object is a sound, the object content may be an output sound; when the target object is an output content, the object content may be a display content displayed after the content is output; when the target object is a target body in the output content, the object content may be a display sub-content corresponding to the target body after the content is output; and when the target object is a partial area content in the output content, the object content may be an area display content after the content is output.

The target object is adjusted in real time, a corresponding moving position may be acquired in real time, and the object content of the target object is adjusted in real time. The navigation controls may be in one-to-one correspondence with the object contents of the target object, and each navigation position may correspond to the corresponding object content. When the moving position changes, the corresponding object content may be adjusted accordingly.

The object change direction is an object change direction for a current object content of the target object, in particular, a forward change, a backward change, an increasing change or a decreasing change for a current object content. If the change is the forward change, the display content arranged before the current display content may be displayed, and if the change is the backward change, the display content arranged after the current display content may be displayed. If the change is the increasing change, the display brightness, display sound and the like of the current VR scene may be increased. If the change is the decreasing change, the display brightness, the display sound and the like in the current VR scene may be decreased.

Optionally, when the plurality of navigation areas of the navigation control are in one-to-one correspondence with the plurality of object contents of the target object respectively, the position of the gaze point of the user in the navigation control changes, the initial position and the moving position may be determined, and the object content of the navigation area where the initial position is located and the object content corresponding to the navigation area where the moving position is located may be further determined. Therefore, according to the content change of the object content corresponding to the navigation area where the moving position is located to the object content of the navigation area where the initial position is located, the object change quantity and the object change direction may be determined.

In the process of moving the gaze point of the user from the initial position to the moving position, for any one object content corresponding to a navigation area where a current position is located, the object change quantity and the page turning content may also be calculated, thereby correspondingly adjusting the object content of the target object, so that the object content of the target object dynamically changes, and when the moving position is reached, the object content corresponding to the moving position is displayed.

In the embodiment of the present application, the navigation control corresponding to the target object is displayed in the VR scene, the user may adjust the content of the target object by the displayed navigation control, when the gaze point of the user changes in the navigation control, the initial position and the moving position of the gaze point may be determined, the object change quantity and the object change direction may be determined according to the initial position and the moving position, and the object content of the target object may be further adjusted according to the object change quantity and the object change direction. The user may adjust the object content by controlling the navigation control, thereby improving the effect of content adjustment. In some embodiments of the present invention, the target object may be brightness, an output content, a target body in the output content and the like in the virtual environment created by the VR device. Several possible implementation modes of the target object will be described in detail below.

In the first implementation mode, the target object is brightness, the object change quantity includes a brightness change value, and the object change direction includes a brightness change direction.

The determining, by the processor, the object change quantity and the object change direction based on the initial position and the moving position may specifically include:
determining, based on the initial position and the moving position, a brightness change quantity and a brightness change direction of display brightness.

The adjusting, by the processor, the target object in accordance with the object change direction and the object change quantity may specifically include:
adjusting the display brightness in accordance with the brightness change direction and the brightness change quantity.

Based on the same adjustment principle of a target object, the target object may further include a playing sound, a display tone value and the like. The display brightness is the brightness of a page content displayed in the VR scene, a display control may be disposed in a display interface for the display brightness, and when the VR device determines that time for the gaze point of the user gazing at the display control exceeds a preset time, the brightness adjustment of the VR device may be started, so that the brightness adjustment mode is simplified.

In the second implementation mode, the target object is an output content, the object change quantity includes a page turning offset, and the object change direction includes a page turning direction.

The determining, by the processor, the object change quantity and the object change direction based on the initial position and the moving position may specifically include:
determining, based on the initial position and the moving position, a page turning offset and a page turning direction of a display content.

The adjusting, by the processor, the target object in accordance with the object change direction and the object change quantity may specifically include:
adjusting the display content of the output content in accordance with the page turning offset and the page turning direction.

There may be a plurality of display contents, among which the adjustment operation of the object content of the target object may be achieved by page turning. The display content is a virtual content displayed currently in a screen of a VR device. In particular, the virtual content may be a plurality of display pictures. During virtual display, the display pictures may be connected and displayed, to create a VR scene where the display contents continuously change. During the display process, each current display content may create a virtual scene to provide the user with an immersive VR experience.

The gaze point of the user may change at any time in the displayed page content to generate a corresponding object change quantity and object change direction. The object change quantity refers to a page turning offset in this implementation mode, and specifically refers to a page turning size of the display content. The display page may gradually change according to the page turning size. For example, when the display content is a scenery and gradually changes, an experience that the scenery gradually changes with the line of sight may be created.

In the third implementation mode, the target object is a target body in an output content of a VR device, the object change quantity includes a switching number, and the object change direction includes a switching direction.

The determining, by the processor, the object change quantity and the object change direction based on the initial position and the moving position may specifically include:
determining, based on the initial position and the moving position, a switching number and a switching direction corresponding to a display sub-content.

The adjusting, by the processor, the target object in accordance with the object change direction and the object change quantity may specifically include:
adjusting the display sub-content of the target body in accordance with the switching number and the switching direction corresponding to the target body.

The target body may correspond to a plurality of display sub-contents. The display sub-contents corresponding to the target body may be switched according to a corresponding switching number and switching direction. A switching quantity may be determined according to the switching number of the target body. The target body in the display page may specifically refer to any body in a current VR scene.

In the embodiment of the present invention, the implementation mode of the target object is described in detail, the display of various implementation modes may be controlled in a VR scene, and the process of controlling the target object in the VR scene is controlled by using a navigation control, and the control process is more simplified and easier to implement.

Optionally, the position change of the gaze point of the user in the navigation control may be achieved by moving the head up/down or rotating the eyeballs up/down, or moving the head left/right or rotating the eyeballs left and right. When the navigation control is perpendicular to the horizontal line, the position change of the gaze point may be achieved by moving the head up/down or rotating the eyeballs up/down, and at this time, the look-down/look-up angle of the user may be determined. When the navigation control is parallel to the horizontal line, the position change of the gaze point may be achieved by moving the head left/right or rotating the eyeballs left and right, and at this time, a leftward/rightward offset angle may be determined based on a vertical line of the horizontal line.

Therefore, it is also possible to calculate the object change quantity and the object change direction based on the look-down/look-up angle of the user or the leftward/rightward offset angle. When the navigation control is perpendicular to a horizontal line, the determining, by the processor, the object change quantity and the object change direction based on the initial position and the moving position may specifically include:
determining, based on the initial position, an initial angle between a line of sight of the user gazing at the initial position and the horizontal line; determining, based on the moving position, an end angle between a line of sight of the user gazing at the moving position and the horizontal line; and
determining the object change quantity and the object change direction according to the initial angle and the end angle.

When the head moves up/down to drive the gaze point to change up and down, the navigation control is perpendicular to the horizontal line.

The determining, by the processor, the object change quantity and the object change direction according to the initial angle and the end angle may specifically include:
subtracting the initial angle from the end angle to obtain an angle difference value; determining the object change direction according to a positive and negative characteristic of the angle difference value; and determining the object change quantity by a ratio of the angle difference value to a navigation angle threshold.

In the embodiment of the present application, the initial angle is determined according to the initial position, the end angle is determined according to the moving position, and a corresponding page turning angle and object change direction may be determined according to the initial angle and the end angle. The control process of the solution of determining the corresponding page turning angle and object change direction according to the angles is simpler, it is not necessary to additionally set object contents corresponding to different positions, the object change quantity and the object change direction may be determined by simple calculation, and the content adjustment efficiency of the target object may be improved.

Or, when the navigation control is parallel to a horizontal line, the determining, by the processor, the object change quantity and the object change direction based on the initial position and the moving position may specifically include:
determining, based on the initial position, an initial angle between a line of sight of the user gazing at the initial position and a vertical line of the horizontal line; determining, based on the moving position, an end angle between a line of sight of the user gazing at the moving position and a vertical line of the horizontal line; and determining the object change quantity and the object change direction according to the initial angle and the end angle.

When the head moves left/right to drive the gaze point to change left and right, the navigation control is parallel to the horizontal line.

The determining, by the processor, the object change quantity and the object change direction according to the initial angle and the end angle may specifically include:
subtracting the initial angle from the end angle to obtain an angle difference value; determining the object change direction according to a positive and negative characteristic of the angle difference value; and determining the object change quantity by a ratio of the angle difference value to a navigation angle threshold.

In the embodiment of the present application, the initial angle is determined according to the initial position, the end angle is determined according to the moving position, and the corresponding page turning angle and object change direction may be determined according to the initial angle and the end angle. The control process of the solution of determining the corresponding page turning angle and object change direction according to the angles is simpler, it is not necessary to additionally set object contents corresponding to different positions, the object change quantity and the object change direction may be determined by simple calculation, and the content adjustment efficiency of the target object may be improved.

As an embodiment, the determining, by the processor, the navigation angle threshold may specifically include:
counting a total change quantity of the object content of the target object; determining, when the gaze point of the user is respectively located at a first end and a second end of the navigation control, an included angle between a line of sight of the user gazing at the first end and a line of sight of the user gazing at the second end; and calculating a ratio of the included angle to the total change quantity to determine the navigation angle threshold corresponding to each object content.

Optionally, two ends of the navigation control are respectively used for corresponding to the maximum swing angle of the user, and the swing angle may be an up-down swing angle or a left-right swing angle.

When the user gazes at the navigation control, an included angle between a line of sight of the user gazing at the first end and a line of sight of the user gazing at the second end may be a maximum included angle that can be achieved by the swing of the user. A ratio of the included angle to the total change quantity may be calculated, and rounded to serve as a navigation angle threshold corresponding to each object content.

Under normal conditions, when the line of sight is at two ends of the navigation control, the determined included angle is a stable constant. Each object content is page-turned in sequence. When the total change quantity is large enough, the navigation angle threshold determined according to the included angle and the total change quantity is small enough, that is, the page turning time of each object content is short enough to create a continuous adjustment effect. In this case, the target object corresponding to the navigation control may be regarded as a continuously played video. For example, when the target object is a television, more object contents and a navigation angle threshold small enough may be set for the navigation control of the television, and when the object content is continuously adjusted, the effect that the television is playing a video may be created.

In the embodiment of the present application, the navigation angle threshold corresponding to each object content may be determined by the navigation range of the navigation control and the total change quantity of the object content, so that the size of the navigation angle threshold may be determined, the subsequent turned page and the object change direction may be determined, and then the object content may be quickly adjusted.

As another embodiment, the navigation control includes a plurality of navigation areas in a VR scene, the plurality of navigation areas are successively arranged to form a rectangular structure, one target object includes a plurality of object contents, and the plurality of navigation areas are in one-to-one correspondence with the plurality of object contents.

The determining, by the processor, the object change quantity and the object change direction based on the initial position and the moving position may specifically include:
determining at least one navigation area contained between the initial position and the moving position; determining at least one object content corresponding to the at least one navigation area;
calculating the display quantity of the at least one object content as an object change quantity; and
acquiring a sliding direction from a navigation area corresponding to the initial position to a navigation area corresponding to the moving position as an object change direction;

The turning, by the processor, the page according to the object change direction and the object change quantity to adjust an object content of the target object may specifically include:
sequentially displaying, starting from the object content corresponding to the navigation control at the initial position, the object content corresponding to each navigation area in accordance with a sliding direction of the navigation area until the object content corresponding to the navigation area at the moving position is displayed.

In the embodiment of the present application, the navigation area is provided for the navigation control, the object content corresponding to each navigation area may be separately displayed, and when the gaze point may be located in the navigation area, the object content may be correspondingly displayed, so that it is more convenient to adjust the object content.

In the embodiment of the present application, the virtual device may be a head-mounted VR display device.

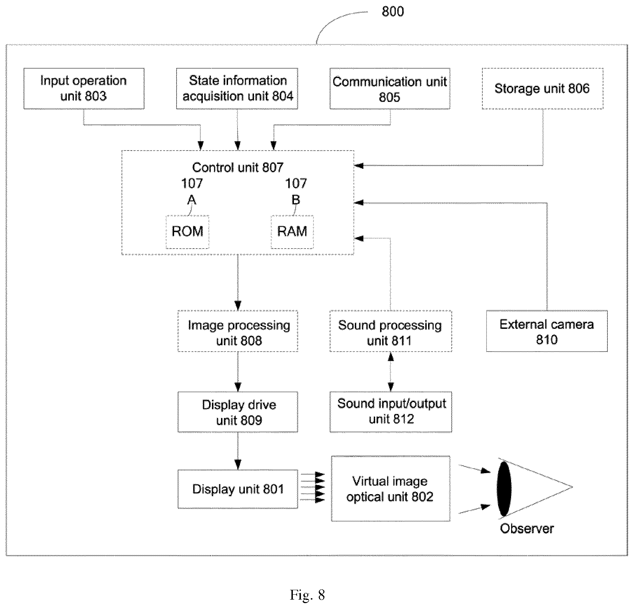

Fig. 8 illustrates an internal configuration structure schematic diagram of a head-mounted VR display device 800 provided according to an embodiment of the present invention.

The head-mounted VR device may include a display unit 801, a virtual image optical unit 802, an input operation unit 803, a state information acquisition unit 804, and a communication unit 805.

The display unit 801 may include a display panel. The display panel is disposed on a side surface of the head-mounted display device 800 facing the face of a user, and may be a one-piece panel or left and right panels respectively corresponding to the left and right eyes of the user. The display panel may be an electroluminescence (EL) element, a liquid crystal display or a miniature display having a similar structure, or a similar laser-scanned display in which the retina may be directly displayed.

The virtual image optical unit 802 photographs an image displayed by the display unit 801 in an enlarged manner, and allows the user to observe the displayed image as an enlarged virtual image. The display image output to the display unit 801 may be an image of a virtual scene provided from a content reproduction device (a Blu-ray disc or a DVD player) or a streaming server, or an image of a real scene photographed by using an external camera 810. In some embodiments, the virtual image optical unit 802 may include a lens unit such as a spherical lens, a non-spherical lens, and a Fresnel lens.

The input operation unit 803 includes at least one operation component for performing an input operation, such as a key, a button, a switch, or other components having similar functions, a user instruction is received and is output to a control unit 807 by the operation component.

The state information acquisition unit 804 is configured to acquire state information of the user wearing the head-mounted display device 800. The state information acquisition unit 804 may include various types of sensors for detecting state information independently, and may acquire state information from an external device (such as a smart phone, a wristwatch, and other multi-functional terminals worn by the user) through the communication unit 805. The state information acquisition unit 804 may acquire head position information and/or pose information of the user. The state information acquisition unit 804 may include one or more of a gyroscope sensor, an acceleration sensor, a global positioning system (GPS) sensor, a geomagnetic sensor, a Doppler effect sensor, an infrared sensor, and a radio frequency field intensity sensor. Further, the state information acquisition unit 804 acquires state information of the user wearing the head-mounted display device 800, and acquires, for example, an operation state of the user (whether the user wears the head-mounted display device 800), an action state of the user (such as standing, walking, running or other similar moving states, the pose of hands or fingertips, the open or closed state of eyes, the direction of a line of sight, and the size of pupils), a mental state (whether the user is immersed in observing the displayed image and the like), or even a physiological state.

The communication unit 805 performs communication processing with an external device, modulation and demodulation processing, and encoding and decoding processing of a communication signal. In addition, the control unit 807 may send transmission data from the communication unit 805 to an external apparatus. The communication mode may be wired or wireless, such as a mobile high-definition link (MHL) or a universal serial bus (USB), a high-definition multimedia interface (HDMI), wireless fidelity (Wi-Fi), Bluetooth communication or low-power Bluetooth communication, a mesh network of an IEEE802.11s standard, and the like. In addition, the communication unit 805 may be a cellular wireless transceiver that is operated according to wideband code division multiple access (W-CDMA), long term evolution (LTE) and similar standards.

In some embodiments, the head-mounted display device 800 may also include a storage unit, the storage unit 806 being a mass storage device configured to have a solid state drive (SSD) or the like. In some embodiments, the storage unit 806 may store application programs or various types of data. For example, the content viewed by the user using the head-mounted display device 800 may be stored in the storage unit 806.

In some embodiments, the head-mounted display device 800 may also include a control unit, and the control unit 807 may include a computer processing unit (CPU) or other devices having similar functions. In some embodiments, the control unit 807 may be configured to execute an application program stored in the storage unit 806, or the control unit 807 may also be configured to perform a method and functional and operational circuits disclosed in some embodiments of the present application.

An image processing unit 808 is configured to perform signal processing such as image quality correction related to an image signal output from the control unit 807, and convert the resolution thereof into the resolution of a screen of the display unit 801. Then, a display drive unit 809 sequentially selects each line of pixels of the display unit 801, and sequentially scans each line of pixels of the display unit 801 line by line, thereby providing a pixel signal based on the signal-processed image signal.

In some embodiments, the head-mounted display device 800 may also include an external camera. The external camera 810 may be disposed on a front surface of a main body of the head-mounted display device 800, and there may be one or more external cameras 810. The external camera 810 may acquire three-dimensional information, and may also be used as a distance sensor. In addition, a position sensitive detector (PSD) for detecting a reflected signal from an object or other types of distance sensors may be used with the external camera 810. The external camera 810 and the distance sensor may be configured to detect the body position, posture and shape of the user wearing the head-mounted display device 800. In addition, under certain conditions, the user may directly view or preview a real scene through the external camera 810.

In some embodiments, the head-mounted display device 800 may further include a sound processing unit. The sound processing unit 811 may perform sound quality correction or sound amplification of a sound signal output from the control unit 807, signal processing of an input sound signal, and the like. Then, a sound input/output unit 812 outputs a sound to the outside after sound processing and inputs a sound from a microphone.

It should be noted that the structure or component shown by a dashed box in Fig. 8 may be independent of the head-mounted display device 800, for example, may be disposed in an external processing system (such as a computer system) for use with the head-mounted display device 800; or, the structure or component shown by a dashed box may be disposed inside or on the surface of the head-mounted display device 800.

In a typical configuration, a computing device includes one or more processors (CPUs), an input/output interface, a network interface, and a memory.

The memory may include a non-permanent memory, a random access memory (RAM), and/or a non-volatile memory in a computer-readable medium, such as a read-only memory (ROM) or a flash RAM. The memory is an example of a computer-readable medium.

The computer-readable medium includes permanent and non-permanent, mobile and non-mobile media, which may implement information storage by any method or technology. The information may be a computer-readable instruction, a data structure, a program module, or other data. Examples of computer storage media include, but are not limited to, a phase change RAM (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disk read-only memory (CD-ROM), a digital versatile disk (DVD) or other optical memories, a magnetic tape cartridge, a magnetic tape storage device or other magnetic storage devices or any other non-transmission media, which may be used to store information accessible by a computing device. As defined herein, the computer-readable medium does not include non-transitory computer-readable media such as modulated data signals and carrier waves.

Certain terms are used throughout the description and claims to refer to particular components. Those skilled in the art will understand that hardware manufacturers may call the same component by different nouns. The present description and claims do not use a name difference as a mode for distinguishing the components, but the functional difference of the components is taken as a criterion for distinguishing. The word "containing" as used throughout the description and claims is an open term and should be interpreted as "containing but not limited to". "Substantially" means that within an acceptable error range, those skilled in the art will be able to solve the technical problems within a certain error range, basically achieving the technical effects. In addition, the term "coupled" is used herein to include any direct and indirect electrical coupling means. Therefore, if it is described here that a first apparatus is coupled to a second apparatus, it is indicated that the first apparatus may be directly and electrically coupled to the second apparatus or indirectly and electrically coupled to the second apparatus through other apparatuses or coupling means.

It should also be noted that the terms "including", "containing" or any other variations thereof are intended to encompass a non-exclusive inclusion, such that the item or system including a series of elements includes not only those elements but also other elements not explicitly listed, or elements that are inherent to such item or system. In the absence of more restrictions, an element defined by the phrase "including one..." does not exclude the existence of additional identical elements in the item or system that includes the element.

## Claims

1. A content adjustment method of a virtual reality device, wherein comprising:
displaying (101) a navigation control corresponding to a target object in a virtual reality scene;
wherein the navigation control comprises a plurality of navigation areas successively arranged to form a rectangular structure, and wherein the target object is a target body in an output content of the virtual reality device, the target object comprises a plurality of object contents, and the plurality of navigation areas comprised in the navigation control are in one-to-one correspondence with the plurality of object contents;
determining (102), according to a position change of a gaze point of a user in the navigation control, an initial position and an end moving position after the position change from the initial position;
determining (103), based on the initial position and the end moving position, a change quantity and a change direction; and
adjusting (104) an object content of the target object in accordance with the change direction and the change quantity;
and **characterized in that** the adjusting an object content of the target object in accordance with the change direction and the change quantity comprises:
sequentially displaying, starting from the object content corresponding to the navigation area at the initial position, at least one object content in accordance with the change direction until the object content corresponding to the navigation area at the end moving position is displayed.

2. A virtual reality device, comprising: a non-volatile memory (702) and a processor (701), wherein the non-volatile memory (702) is configured to store computer-readable program codes, and the processor (701) is configured to execute the computer program codes to implement:
displaying a navigation control corresponding to a target object in a virtual reality scene, wherein the navigation control comprises a plurality of navigation areas successively arranged to form a rectangular structure, and wherein the target object is a target body in an output content of the virtual reality device, the target object comprises a plurality of object contents, and the plurality of navigation areas comprised in the navigation control are in one-to-one correspondence with the plurality of object contents; determining, according to a position change of a gaze point of a user in the navigation control, an initial position and an end moving position; determining, based on the initial position and the end moving position, a change quantity and a change direction; and adjusting an object content of the target object in accordance with the change direction and the change quantity; and **characterized in that**
the adjusting an object content of the target object in accordance with the change direction and the change quantity comprises: sequentially displaying, starting from the object content corresponding to the navigation area at the initial position, at least one object content in accordance with the change direction until the object content corresponding to the navigation area at the end moving position is displayed.

## Patentansprüche

1. Verfahren zur Inhaltsanpassung einer Vorrichtung für virtuelle Realität, wobei umfassend:
Anzeigen (101) einer Navigationssteuerung, die einem Zielobjekt in einer Szene der virtuellen Realität entspricht; wobei die Navigationssteuerung eine Vielzahl von Navigationsbereichen umfasst, die nacheinander angeordnet sind, um eine rechteckige Struktur zu bilden, und wobei das Zielobjekt ein Zielkörper in einem Ausgabeinhalt der Vorrichtung für virtuelle Realität ist,
das Zielobjekt umfasst eine Vielzahl von Objektinhalten und Z P - J Z a eine Vielzahl der Navigationsbereiche, die in der Navigationssteuerung enthalten sind und in Eins-zu-Eins-Übereinstimmung mit der Vielzahl von Objektinhalten stehen;
Bestimmen (102), gemäß einer Positionsänderung eines Blickpunkts eines Benutzers in der Navigationssteuerung, einer Ausgangsposition und Z P einer Endbewegungsposition J Z a nach der Positionsänderung von der Ausgangsposition;
Bestimmen (103), basierend auf der Ausgangsposition und der Z P J Z-Endbewegungsposition, einer Änderungsgröße und einer
Änderungsrichtung; und
Anpassen (104) eines Objektinhalts des Zielobjekts in Übereinstimmung mit der Änderungsrichtung und der Änderungsmenge;
und Z P beschrieben in diesem J Z
das Anpassen eines Objektinhalts des Zielobjekts in Übereinstimmung mit der Änderungsrichtung und der Änderungsmenge umfasst:
sequentielles Anzeigen, ausgehend von dem Objektinhalt, der dem Navigationsbereich in der Ausgangsposition entspricht, mindestens eines Objektinhalts gemäß der Änderungsrichtung bis zu dem Objektinhalt, entsprechend dem Navigationsbereich an Z P JZ Endbewegungsposition, der angezeigt wird.

2. Vorrichtung für virtuelle Realität, umfassend: einen energieunabhängiger Speicher (702) und einen Prozessor (701), wobei der energieunabhängiger Speicher (702) konfiguriert ist, Computer-lesbare Programmcodes zu speichern, und der Prozessor (701) konfiguriert ist, die Computerprogrammcodes auszuführen, um Folgendes zu implementieren: Anzeigen einer Navigationssteuerung, die einem Ziel objekt in einer Szene der virtuellen Realität entspricht, wobei die Navigationssteuerung eine Vielzahl von Navigationsbereichen umfasst, die nacheinander angeordnet sind, um eine rechteckige Struktur zu bilden, und wobei das Zielobjekt ein Zielkörper in einem Ausgabeinhalt der Vorrichtung für virtuelle Realität ist, das Zielobjekt umfasst eine Vielzahl von Objektinhalte und Z P JZ eine Vielzahl von Navigationsbereiche, die in der Navigationssteuerung enthalten sind und in Eins-zu-Eins-Übereinstimmung mit der Vielzahl von Objektinhalten stehen; Bestimmen, gemäß einer Positionsänderung eines Blickpunkts eines Benutzers in der Navigationssteuerung, einer Ausgangsposition und einer Z P J2-Endbewegungsposition; Bestimmen, basierend auf der Ausgangsposition und der Z P JZ Endbewegungsposition
einer Änderungsmenge und einer Änderungsrichtung; und Anpassen
eines Objektinhalts des Zielobjekts in Übereinstimmung mit der Änderungsrichtung und der Änderungsgröße; und Z P beschrieben in diesem JZ,
Anpassen eines Objektinhalts des Zielobjekts in Übereinstimmung mit der Änderungsrichtung und die Änderungsmenge umfasst: sequentielles Anzeigen, ausgehend vom
Objektinhalt, der dem Navigationsbereich an der Ausgangsposition entspricht, mindestens eines Objektinhalts entsprechend der Änderungsrichtung, bis dem Objektinhalt, der dem Navigationsbereich an der Z P JZ Endbewegungsposition entspricht, der angezeigt wird.

## Revendications

1. Procédé d'ajustement de contenu d'un dispositif de réalité virtuelle, comprenant :
l'affichage (101) d'une commande de navigation correspondant à un objet cible dans une scène de réalité virtuelle, dans laquelle la commande de navigation comprend une pluralité de zones de navigation agencées successivement pour former une structure rectangulaire, et dans laquelle l'objet cible est un corps cible dans un contenu de sortie du dispositif de réalité virtuelle, l'objet cible comprend une pluralité de contenus d'objet, et la pluralité des zones de navigation comprises dans la commande de navigation sont en correspondance un à un avec la pluralité de contenus d'objet ;
la détermination (102), selon un changement de position d'un point de regard d'un utilisateur dans la commande de navigation, d'une position initiale et d'une position de déplacement finale après le changement de position depuis la position initiale ;
la détermination (103), sur la base de la position initiale et de la position de déplacement finale, d'une quantité de changement et d'une direction de changement ; et
l'ajustement (104) d'un contenu d'objet de l'objet cible conformément à la direction de changement et à la quantité de changement ;
et **caractérisé en ce que**
l'ajustement d'un contenu d'objet de l'objet cible conformément à la direction de changement et à la quantité de changement comprend :
l'affichage séquentiel, à partir du contenu d'objet correspondant à la zone de navigation à la position initiale, au moins d'un contenu d'objet conformément à la direction de changement jusqu'à ce que le contenu d'objet correspondant à la zone de navigation à la position de déplacement finale soit affiché.

2. Dispositif de réalité virtuelle, comprenant : une mémoire non volatile (702) et un processeur (701), dans lequel la mémoire non volatile (702) est configurée pour stocker des codes de programme lisibles par ordinateur, et le processeur (701) est configuré pour exécuter les codes de programmes informatiques afin de mettre en œuvre :
l'affichage d'une commande de navigation correspondant à un objet cible dans une scène de réalité virtuelle, dans laquelle la commande de navigation comprend une pluralité de zones de navigation agencées successivement pour former une structure rectangulaire, et dans laquelle l'objet cible est un corps cible dans un contenu de sortie du dispositif de la réalité virtuelle,
l'objet cible comprend une pluralité de contenus d'objet, et la pluralité de zones de navigation comprises dans la commande de navigation sont en correspondance un à un avec la pluralité de contenus d'objet ; la détermination, selon un changement de position d'un point de regard d'un utilisateur dans la commande de navigation, d'une position initiale et d'une position de déplacement finale ; la détermination, sur la base de la position initiale et de la position de déplacement finale, d'une quantité de changement et d'une direction de changement ; et
l'ajustement d'un contenu d'objet de l'objet cible conformément à la direction de changement et à la quantité de changement ; et **caractérisé en ce que** l'ajustement d'un contenu d'objet de l'objet cible conformément à la direction de changement et à la quantité de changement comprend : l'affichage séquentiel, à partir du contenu d'objet correspondant à la zone de navigation à la position initiale, au moins d'un contenu d'objet conformément avec la direction de changement jusqu'à ce que le contenu d'objet correspondant à la zone de navigation à la position de déplacement finale soit affiché.
